# EUROPÄISCHE PATENTSCHRIFT

(11) **EP 0 725 517 B1**
(45) Veröffentlichungstag und Bekanntmachung des Hinweises auf die Patenterteilung: **24.07.2002**
(21) Anmeldenummer: 96101505.4
(22) Anmeldetag: 02.02.1996
(51) Int. Cl.: H04L 12/42, H04L 7/00, H04L 12/24

(54) **Verfahren zur Initialisierung eines Netzwerks**
Method for initializing a network
Procédé d'initialisation d'un réseau

(30) Priorität: 02.02.1995 DE 19503214
(43) Veröffentlichungstag der Anmeldung: 07.08.1996
(73) Patentinhaber: BECKER GmbH, D-76307 Karlsbad (DE)
(72) Erfinder: Hetzel, Herbert, D-76356 Weingarten (DE)
(74) Vertreter: Patentanwälte Westphal, Mussgnug & Partner

(56) Entgegenhaltungen:
- EP-A- 0 060 307

## Beschreibung

Die vorliegende Erfindung betrifft ein Verfahren zur Synchronisierung jedes Teilnehmers innerhalb eines Netzwerkes zwischen mehreren ringförmig miteinander verbundenen Teilnehmern gemäß den Merkmalen des Oberbegriffes des Anspruches 1.

Ein solches Verfahren ist beispielsweise in EP-A 0 060 307 beschrieben. Dieses Dokument beschreibt die Synchronisierung eines einzelnen Teilnehmers beim Anschluß an ein Netzwerk. Die einzelnen Teilnehmer sind ringförmig innerhalb des Netzwerkes miteinander verbunden, wobei der ankommende Datenstrom bei jedem Teilnehmer, solange dieser noch nicht eingerastet ist, in zwei identische Datenströme aufgeteilt wird, von denen der eine für den Einrastprozeß verwendet und der andere sofort an den nachfolgenden Teilnehmer weitergeleitet wird.

Problematisch bei diesem bekannten Verfahren ist eine auftretende Fehlfunktion eines Teilnehmers. Wie das Netzwerk bei einer solchen Fehlfunktion eines Teilnehmers arbeitet, wird nicht beschrieben. Darüber hinaus ist bei dem bekannten Verfahren lediglich offenbart, daß die einzelnen Teilnehmer jeweils für sich genommen einen Einrastvorgang durchführen. Damit ist aber der Nachteil verbunden, daß die Inbetriebnahme des Netzwerkes mit sämtlichen teilnehmenden Komponenten erhebliche Zeit in Anspruch nimmt, bevor überhaupt eine Datenübertragung im gesamten Netz möglich ist. Die für die Inbetriebnahme erforderliche Zeit nimmt daher mit zunehmender Teilnehmerzahl zu, was bei einer üblichen Einrastdauer von 26 bis 30 msec bald zu einer erheblichen Verzögerung führen kann.

Der Erfindung liegt deshalb die Aufgabe zugrunde, das bekannte Verfahren so weiterzubilden, daß die Inbetriebnahme des Netzwerkes beschleunigt wird, wobei eine Fehlfunktion eines Teilnehmers Berücksichtigung findet.

Diese Aufgabe wird durch ein Verfahren mit den Merkmalen des Anspruches 1 gelöst.

Weiterbildungen dieses Verfahrens sind Gegenstand der Unteransprüche.

Durch die Aufteilung des Datenstroms in jedem Teilnehmer in zwei identische Datenströme und die sofortige Weiterleitung an den nachfolgenden Teilnehmer erhalten alle Teilnehmer im Netzwerk praktisch gleichzeitig das Taktsignal und beginnen praktisch gleichzeitig den Einrastvorgang. Demzufolge ist die Einrastung aller Teilnehmer annähernd innerhalb der Zeit vollendet, die ein einzelner Teilnehmer zur Einrastung benötigt Mit anderen Worten, die für die Einrastung aller Teilnehmer auf die vorgegebene Taktfrequenz erforderliche Zeit ist gegenüber dem bekannten Verfahren um einen Faktor verringert, der der Anzahl der Teilnehmer im Netzwerk entspricht.

Die sofortige Weiterleitung des Datenstroms durch die Teilnehmer bei gleichzeitigem Starten des Einrastvorgangs wird bevorzugt dadurch bewirkt, daß der von einem Teilnehmer empfangene Datenstrom einer Steuereinheit zugeführt wird, in welcher durch Kopieren ein erster und ein zweiter Datenstrom erzeugt werden, wobei der ersten Datenstrom einer Einrastschaltung und der zweite Datenstrom unmittelbar dem nachfolgenden Teilnehmer zugeleitet werden. Auf diese Weise steht der das Taktsignal enthaltende Datenstrom allen Teilnehmern annähernd gleichzeitig zur Verfügung und jeder Teilnehmer beginnt parallel zur Weiterleitung des Datenstroms mit dem Einrastvorgang.

Nach vollendetem Einrastvorgang leitet die Steuereinheit eines jeden Teilnehmers den der Einrastschaltung zugeleiteten ersten Datenstrom dem nachfolgenden Teilnehmer zu und unterbricht den zweiten Datenstrom. Damit ist die Initialisierung abgeschlossen und das Netzwerk kann zur Datenübertragung zwischen einzelnen Teilnehmern benutzt werden.

Nach der Erfindung leitet die Steuereinheit bei Fehlfunktion eines Teilnehmers den empfangenen Datenstrom unmittelbar dem nachfolgenden Teilnehmer zu. Die Fehlfunktion eines Teilnehmers, beispielsweise ein Ausrasten aus der Taktfrequenz, führt dazu, daß der im Netzwerk übermittelte Datenstrom an der Stelle dieses Teilnehmers unterbrochen wird. Bei einem unidirektionalen Ringnetzwerk ist dann die Datenübertragung unterbrochen. Durch die erfindungsgemäße Augestaltung ist nun gewährleistet, daß bei einer Fehlfunktion eines Teilnehmers dieser quasi aus dem Netz herausgenommen, der Datenstrom durch diesen also einfach hindurchgeleitet wird. Damit bleibt eine Datenübertragung zwischen allen anderen Teilnehmern des Netzwerks weiterhin möglich.

Die unmittelbare Weiterleitung des empfangenen Datenstroms an den nachfolgenden Teilnehmer erfolgt bevorzugt wiederum dadurch, daß die Steuereinheit den empfangenen Datenstrom kopiert und einerseites unmittelbar dem nachfolgenden Teilnehmer und andererseites der Einrastschaltung zuleitet. Sollte der betreffende Teilnehmer zu einem späteren Zeitpunkt wieder einwandfrei funktionieren, beispielsweise nach einem Reset-Vorgang, so wird in diesem ein erneuter Einrastvorgang gestartet und nach erfolgtem Einrasten die unmittelbare Weiterleitung des Datenstroms durch die ordnungsgemäße Durchleitung des Datenstroms durch diesen Teilnehmer ersetzt. Der zeitweilig gestörte Teilnehmer kann so auf einfache Weise wieder in das Netz integriert werden.

Zur Kenntlichmachung einer Störung erzeugt die Steuereinheit eines fehlerhaften Teilnehmers bevorzugt ein Fehlermeldesignal. Dieses Fehlermeldesignal kann auch mit der Adresse des Teilnehmers versehen und über das Netzwerk einem bestimmten Empfänger übermittelt werden, der beispielsweise eine Anzeigeeinheit für gestörte Teilnehmer aufweist.

Ein Ausführungsbeispiel der Erfindung ist in der Zeichnung dargestellt und wird. nachfolgend beschrieben. Es zeigen
- Figur 1: ein mehrere Teilnehmer aufweisendes Netzwerk mit Ringstruktur und
- Figur 2: eine schematische Darstellung der Datenweiterleitung durch einen Teilnehmer.

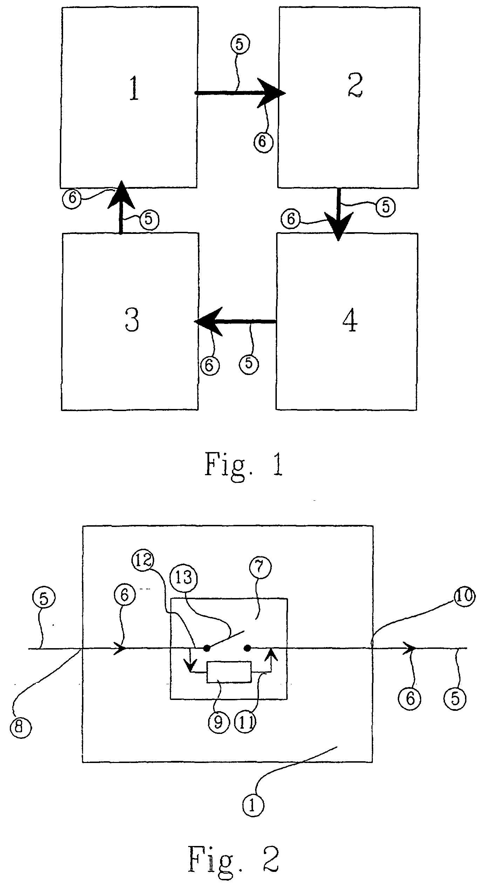

Das in Figur 1 dargestellte Netzwerk enthält vier ringförmig verbundene Teilnehmer 1 bis 4. Bei diesen vier Teilnehmern handelt es sich beispielsweise um einen Rundfunkempfänger 1 und einen CD-Spieler 2 als Datenquellen sowie um einen Verstärker 3 und eine Audio-Video-Kontrolleinheit 4 als Datensenken, wobei allerdings alle Datenquellen gleichzeitig auch Datensenken und alle Datensenken gleichzeitig auch Datenquellen sein können, insbesondere für Steuerdaten.

Die vier Teilnehmer 1 bis 4 sind über eine Datenleitung 5 miteinander verbunden, bei der es sich beispielsweise um einen Lichtwellenleiter handelt. Die Datenübertragung zwischen einzelnen Teilnehmern erfolgt in der mit Pfeilen 6 angegebenen Richtung.

Jeder der Teilnehmer 1 bis 4 enthält eine Steuereinheit 7, wie sie beispielhaft in Figur 2 für Teilnehmer 1 dargestellt ist. Über die Steuereinheit 7 wird die Datenübertragung durch den jeweiligen Teilnehmer gesteuert. Die über einen Netzdateneingang 8 empfangenen Daten werden zu der insbesondere als integrierte Schaltung ausgebildeten Steuereinheit 7 geleitet, welche eine Einrastschaltung 9 enthält und mit einem Netzdatenausgang 10 verbunden ist.

Der über den Netzeingang 8 empfangene Datenstrom wird von der Steuereinheit kopiert und in einen ersten und einen zweiten Datenstrom aufgeteilt. Der erste Datenstrom wird über eine interne Datenleitung 11 der Einrastschaltung 9 zugeführt, in welcher der Einrastvorgang gestartet wird. Der zweite Datenstrom wird über einen internen By-Pass 12 direkt mit dem Netzausgang 10 verbunden. Sobald die Einrastschaltung 9 den Einrastvorgang beendet hat, wird der interne By-Pass 12 durch die Steuereinheit 7 unterbrochen, was durch den in Leitung 12 vorhandenen Schalter 13 angedeutet ist.

Bei Inbetriebnahme des Netzwerks ist der Schalter 13 geschlossen und der über den Netzeingang 8 empfangene Datenstrom wird einerseits zur Einrastschaltung 9 und andererseits über den Netzausgang 10 dem nachfolgenden Teilnehmer zugeleitet. Dieser entsprechend aufgebaute Teilnehmer kopiert den Datenstrom ebenfalls und führt diesen einerseits seiner Einrastschaltung und andererseits über seinen Netzausgang direkt dem auf diesen folgenden Teilnehmer zu und so fort. Alle Teilnehmer im Netzwerk erhalten auf diese Weise bei Inbetriebnahme praktisch gleichzeitig das Taktsignal und starten parallel den Einrastvorgang auf dieses Signal. Sobald der Einrastvorgang abgeschlossen ist, unterbricht jeder Teilnehmer seinen By-Pass 12 und leitet den Datenstrom über seine Einrastschaltung 9 und seinen Netzausgang 10 dem nachfolgenden Teilnehmer zu.

Durch das beschriebene Initialisierungsverfahren werden alle Teilnehmer in einem Netzwerk annähernd gleichzeitig auf das vorgegebene Taktsignal eingerastet. Mit anderen Worten, es findet ein paralleler Einrastvorgang aller Teilnehmer eines Netzwerks statt, der im wesentlichen nicht länger dauert als das Einrasten eines einzigen Teilnehmers.

## Patentansprüche

1. Verfahren zur Synchronisierung jedes Teilnehmers innerhalb eines Netzwerks zwischen mehreren ringförmig miteinander verbundenen Teilnehmern, bei welchem ein Taktsignal in einem kontinuierlichen Datenstrom von einer Netzwerkposition ausgehend durch das Netzwerk geschickt, in jedem Teilnehmer nach Empfang des Datenstroms ein Einrastprozess auf die Taktfrequenz gestartet und der Datenstrom nach vollendeter Einrastung an einen nachfolgenden Teilnehmer weitergeleitet wird, wobei der ankommende Datenstrom bei jedem Teilnehmer (1 bis 4), solange dieser noch nicht eingerastet ist, in zwei identische Datenströme aufgeteilt wird, von denen der eine für den Einrastprozess des Teilnehmers verwendet und der andere über einen By-Pass (12) an den nachfolgenden Teilnehmer (1 bis 4) weitergeleitet wird,
**dadurch gekennzeichnet,**
**dass** bei Inbetriebnahme des Netzwerkes alle Teilnehmer gleichzeitig einen Einrastvorgang durchführen, indem der Datenstrom jedem der Teilnehmerüber den By-Pass (12) des vorhergehenden Teilnehmers (1 bis 4) zugeführt wird, und dass bei erfolgtem Einrastvorgang und detektierter Fehlerfreiheit eines Teilnehmers (1 bis 4) dessen zugeordneter By-Pass (12) unterbrochen wird, wodurch anschließend der Datenstrom ausschließlich über diesen Teilnehmer (1 bis 4) an den nachfolgenden Teilnehmer geführt wird.

2. Verfahren nach Anspruch 1, **dadurch gekennzeichnet, daß** der in einem Teilnehmer (1 bis 4) empfangene Datenstrom einer Steuereinheit (7) zugeführt wird, in welcher durch Kopieren ein erster und ein zweiter Datenstrom erzeugt werden, daß der erste Datenstrom einer Einrastschaltung (9) und der zweite Datenstrom unmittelbar dem nachfolgenden Teilnehmer (1 bis 4) zugeleitet werden, und daß die Steuereinheit (7) nach vollendetem Einrastvorgang den der Einrastschaltung (9) zugeleiteten ersten Datenstrom dem nachfolgenden Teilnehmer (1 bis 4) zuleitet und den zweiten unmittelbaren Datenstrom unterbricht.

3. Verfahren nach Anspruch 2, **dadurch gekennzeichnet, daß** die Steuereinheit (7) bei Fehlfunktion eines Teilnehmers (1 bis 4) den von diesem empfangenen Datenstrom unmittelbar dem nachfolgenden Teilnehmer (1 bis 4) zuleitet.

4. Verfahren nach Anspruch 3, **dadurch gekennzeichnet, daß** die Steuereinheit (7) bei Fehlfunktion eines Teilnehmers (1 bis 4) durch Kopieren einen ersten und einen zweiten Datenstrom erzeugt, den ersten Datenstrom der Einrastschaltung (9) und den zweiten Datenstrom unmittelbar dem nachfolgendem Teilnehmer (1 bis 4) zuleitet und bei Wieder-Funktion und nach Wiedereinrasten des Teilnehmers (1 bis 4) den der Einrastschaltung (9) zugeleiteten ersten Datenstrom dem nachfolgenden Teilnehmer (1 bis 4) zuleitet und den zweiten Datenstrom wieder unterbricht.

5. Verfahren nach Anspruch 3 oder 4, **dadurch gekennzeichnet, daß** die Steuereinheit (7) bei Fehlfunktion ein Fehlermeldesignal ausgibt.

6. Verfahren nach Anspruch 5, **dadurch gekennzeichnet, daß** das Fehlermeldesignal mit der Adresse des fehlerhaften Teilnehmers (1 bis 4) versehen und über das Netzwerk zu einer das Fehlermeldesignal verarbeitenden Stelle übertragen wird.

## Claims

1. A method for the synchronisation of each member within a network between several members connected to one another in a ring, in which a timing signal is sent in a continuous data stream starting from one network position through the network, a latching process to the clock frequency is started in each member after the data stream has been received and when the latching has been completed the data stream is transferred to a following member, whereby for each member (1 to 4), provided it is not yet latched, the incoming data stream is divided into two identical data streams, of which the one is used for the latching process of the member and the other is relayed via a bypass (12) to the following member (1 to 4),
**characterised in that** upon the initial operation of the network all members simultaneously carry out a latching operation by the data stream being suppled to each of the members via the bypass (12) of the preceding member (1 to 4),
**and in that** when the latching operation has occurred and a member (1 to 4) is detected to be fault-free, its associated bypass (12) is interrupted, by which the data stream is then conveyed exclusively via this member (1 to 4) to the following member.

2. A method according to Claim 1,
**characterised in that** the data stream received in a member (1 to 4) is supplied to a control unit (7), in which a first and a second data stream are produced by copying,
**in that** the first data stream is fed to a latching circuit (9) and the second data stream is fed directly to the following member (1 to 4),
**and in that** after the completed latching operation the control unit (7) feeds the first data stream fed to the latching circuit (9) to the following member (1 to 4) and interrupts the second direct data stream.

3. A method according to Claim 2,
**characterised in that** upon a malfunction of a member (1 to 4) the control unit (7) feeds the data stream received from it directly to the following member (1 to 4).

4. A method according to Claim 3,
**characterised in that** in the event of a malfunction of a member (1 to 4), the control unit (7) produces a first and a second data stream by copying, feeds the first data stream to the latching circuit (9) and the second data stream directly to the following member (1 to 4) and upon the renewed function and renewed latching of the member (1 to 4) it feeds the first data stream fed to the latching circuit (9) to he following member (1 to 4) and again interrupts the second data stream.

5. A method according to Claim 3 or 4,
**characterised in that** the control unit (7) emits an error message signal in the event of a malfunction.

6. A method according to Claim 5,
**characterised in that** the error message signal is provided with the address of the defective member (1 to 4) and is transmitted via the network to a place processing the error message signal.

## Revendications

1. Procédé de synchronisation de chaque participant dans un réseau formé entre plusieurs participants reliés les uns aux autres suivant un réseau en anneau, selon lequel un signal de cadence est émis suivant un flux de données continu à partir d'une position du réseau à travers le réseau, et dans chaque participant, après la réception du flux de données on effectue une opération d'accrochage sur la fréquence de cadence et une fois l'accrochage terminé, le flux de données est transmis vers le participant suivant,
le flux de données d'entrée de chaque participant (1-4), aussi longtemps que ce participant n'est pas accroché, étant divisé en deux flux de données identiques dont l'un est utilisé pour la procédure d'accrochage du participant et l'autre est transmis par une dérivation (12) vers le participant suivant (1 à 4),
**caractérisé en ce que**
lors de la mise en route du réseau tous les participants effectuent simultanément une opération d'accrochage **en ce que** le flux de données est fourni à chaque participant par la dérivation (12) du participant précédent (1 à 4), et
une fois l'opération d'accrochage réussie et l'absence de défaut détecté sur un participant (1-4), dont la dérivation (12) correspondante a été interrompue, ensuite le flux de données passera exclusivement par ce participant (1-4) vers le participant suivant.

2. Procédé selon la revendication 1,
**caractérisé en ce que**
le flux de données, reçu par un participant (1-4), est fourni à une unité de commande (7) dans laquelle on génère un premier et un second flux de données en procédant par copie,
le premier flux de données est fourni à un circuit d'accrochage (9) et le seconde flux de données est transmis directement au participant suivant (1-4) et
l'unité de commande (7), une fois l'opération d'accrochage terminée, envoie le premier flux de données allant vers le circuit d'accrochage (9) vers le participant suivant (1-4) et interrompt le second flux de données indirect.

3. Procédé selon la revendication 2,
**caractérisé en ce que**
l'unité de commande (7), en cas de défaut de fonctionnement d'un participant (1-4) transmet le flux de données reçu par celui-ci, directement vers le participant suivant (1-4).

4. Procédé selon la revendication 3,
**caractérisé en ce qu'**
en cas de défaut de fonctionnement d'un participant (1-4), l'unité de commande (7) copie et génère un premier et un second flux de données, en fournissant le premier flux de données au circuit d'accrochage (9) et le second flux de données directement au participant suivant (1-4), et en cas de rétablissement du fonctionnement et réaccrochage du participant (1-4) elle conduit le premier flux de données fourni au circuit d'accrochage (9) vers le participant suivant (1-4) et interrompt de nouveau le second flux de données.

5. Procédé l'une quelconque des revendications 3 ou 4,
**caractérisé en ce que**
l'unité de commande (7) émet un signal de défaut de fonctionnement en cas de défaut de fonctionnement.

6. Procédé selon la revendication 5,
**caractérisé en ce que**
le signal d'information de défaut comporte l'adresse du participant défectueux (1-4) et est transmis par le réseau vers un point traitant le signal d'information de défaut.
